# EUROPÄISCHE PATENTSCHRIFT

(11) **EP 1 730 425 B1**
(45) Veröffentlichungstag und Bekanntmachung des Hinweises auf die Patenterteilung: **19.03.2008**
(21) Anmeldenummer: 05716265.3
(22) Anmeldetag: 22.03.2005
(51) Int. Cl.: F16H 55/36, F02N 11/04

(54) **RIEMENSCHEIBE**
PULLEY
POULIE A COURROIE

(30) Priorität: 02.04.2004 DE 102004016352
(43) Veröffentlichungstag der Anmeldung: 13.12.2006
(73) Patentinhaber: Schaeffler KG, 91074 Herzogenaurach (DE)
(72) Erfinder: WIESNETH, Bernhard, 91054 Erlangen (DE); BOGNER, Michael, 90542 Eckental (DE)
(86) Internationale Anmeldenummer: PCT/EP2005/002996
(87) Internationale Veröffentlichungsnummer: WO 2005/098282

(56) Entgegenhaltungen:
- EP-A- 0 517 184
- EP-A- 0 517 185
- DE-A1- 10 253 495
- US-A1- 2004 014 540

## Beschreibung

### Gebiet der Erfindung

Die vorliegende Erfindung betrifft eine Riemenscheibe die vorzugsweise für den Einsatz in Riementrieben von Kraftfahrzeugen vorgesehen sind. Derartige Riemenscheibe können beispielsweise auf der Antriebswelle einer Lichtmaschine angeordnet sein oder aber auch auf der Antriebswelle eines sogenannten Startergenerators.

Aus EP 0 517 184 B1 beispielsweise ist ein Riementrieb für ein motorisiertes Fahrzeug und ein Generatoraggregat für diesen Riementrieb bekannt geworden, wobei eine Riemenscheibe auf der Generatorwelle angeordnet ist. Die Riemenscheibe umfasst einen Laufmantel, dessen Lauffläche von dem Riemen umschlungen ist. Die Riemenscheibe umfasst ferner eine Nabe, die koaxial zum Laufmantel angeordnet ist. Zwischen dem Laufmantel und der Nabe sind Relativdrehungen möglich. Zu diesem Zweck ist eine Schraubendrehfeder in einem von Wänden begrenzten Ringraum angeordnet, wobei die Drehachse der Schraubendrehfeder koaxial zur Drehachse der Riemenscheibe angeordnet ist. Das eine Federende der Schraubendrehfeder ist drehfest an der Nabe aufgenommen und das andere Federende der Schraubendrehfedern ist drehfest an dem Laufmantel angeordnet. Im Betrieb der Brennkraftmaschine treibt der Riemen diese Riemenscheibe mit einem positiven Drehmoment an, wobei dieses erste positive Drehmoment von dem Laufmantel über die Schraubendrehfeder auf die Nabe und von dort in die Generatorwelle eingeleitet wird. Die im Betrieb der Brennkraftmaschine sich einstellenden Drehungleichförmigkeiten werden ebenfalls auf die Riemenscheibe übertragen. Diese Drehungleichförmigkeit äußert sich in einer kurzzeitigen Verzögerung der Riemengeschwindigkeit, so dass in die Riemenscheibe ein erstes negatives Drehmoment eingeleitet wird. Unter dieser Verzögerung der Riemenscheibe findet nun eine Relativdrehung statt zwischen dem Laufmantel und der Nabe. Die drehträge Generatorwelle hat kurzzeitig eine Voreilung, wobei die Federenden der Schraubendrehfeder zueinander verdreht werden.

Im Aggregatetrieb einer Brennkraftmaschine eines Kraftfahrzeuges sind mehrere Aggregate angeordnet, die von dem Riemen angetrieben werden können. Der Bedarf an Nebenaggregaten mit hohem Leistungsbedarf nimmt zu. Beispielsweise werden in Kraftfahrzeugen zunehmend elektrisch betätigte Einrichtungen eingesetzt, so dass die Leistungsanforderungen an den Generator ebenfalls zunehmen. Zugleich ist man bestrebt, in zunehmendem Maße sogenannte Startergeneratoren vorzusehen. Startergeneratoren übernehmen im Generatorbetrieb die Funktion eines Generators um elektrische Verbraucher mit elektrischer Energie zu versorgen. Im Starterbetrieb wirkt der Startergenerator als Motor und treibt die Kurbelwelle des Motors über den Riemen an. Im Starterbetrieb überträgt die Riemenscheibe Drehmomente, die ein Mehrfaches der Drehmomente betragen können, die im Generatorbetrieb zu erwarten sind.

Aus Dokument US 2004 014 540, das den nächstliegenden Stand der Technik repräsentiert, ist eine Riemenscheibe mit den Merkmalen des Oberbegriffs des unabhängigen Anspruchs 1 bekannt.

### Aufgabe der Erfindung

Aufgabe der vorliegenden Erfindung ist es, eine Riemenscheibe nach den Merkmalen des Oberbegriffs des Anspruchs 1 anzugeben, die geeignet ist für die Verwendung an einem sogenannten Startergenerator. Erfindungsgemäß wird diese Aufgabe dadurch gelöst, dass die Schraubendrehfeder unter dem ersten Drehmoment mit radialem Abstand zu den Wänden angeordnet ist, wobei die Federenden der Schraubendrehfeder unter einem zweiten, auf die Nabe einwirkenden Drehmoment unter Veränderung des Durchmessers der Windung der Schraubendrehfeder an der einen Wand des Ringraums anliegt, wobei das zweite Drehmoment größer als das erste Drehmoment ist.

Dadurch, dass die Schraubendrehfeder unter Einwirkung der ersten Drehmomente sich frei verdrehen kann, also eine Verdrehung der Federenden zueinander stattfinden kann, ohne dass die Einschnürung bzw. Aufweitung der Schraubendrehfeder behindert wird, ist gemeinsam mit einer angepassten Dämpfungseinrichtung eine gedämpfte Schwingung erreicht, die insgesamt eine Reduzierung der Belastung des Riemens zur Folge hat. Unter diesem ersten Drehmoment erfährt der Laufmantel der erfindungsgemäßen Riemenscheibe erhöhte Amplituden, und die Nabe dem gegenüber reduzierte Amplituden. In anderen Worten ausgedrückt: Die Beschleunigungen und Verzögerungen, die an der Nabe wirksam sind, sind deutlich gedämpft. Wenn das größere zweite Drehmoment von der Seite der Nabe her in die Riemenscheibe übertragen wird, ist sichergestellt, dass die Schraubendrehfeder unter Aufweitung oder Zusammenschnürung ihrer Windungen sich an eine der Wände anlegt, so dass eine weitere Verdrehung der Federenden zueinander nicht mehr stattfinden kann. Eine ungedämpfte Mitnahme des Laufmantels ist demzufolge gewährleistet. Die Nabe und der Laufmantel drehen dann gemeinsam ohne weitere Relativdrehung. Wenn diese Riemenscheibe auf der Antriebswelle eines Startergenerators angeordnet ist, ist im Starterbetrieb jedenfalls sichergestellt, dass das erforderliche Startmoment zum Starten der Brennkraftmaschine ungedämpft übertragen werden kann.

Bei einem erfindungsgemäßen Startergenerator ist diese Riemenscheibe auf dessen Antriebswelle angeordnet, wobei die ersten Drehmomente im Generatorbetrieb des Startergenerators wirksam sind, und wobei die zweiten Drehmomenten im Starterbetrieb des Startergenerators wirksam sind.

Derartige Startergeneratoren können vorzugsweise in einem Riementrieb einer Brennkraftmaschine angeordnet sein, mit einer von einer Kurbelwelle der Brennkraftmaschine angetriebenen Riemenscheibe zum Antreiben des Riemens, wobei die auf der Antriebswelle des Startergenerators angeordnete Riemenscheibe von dem Riemen umschlungen ist, wobei zum Starten der Brennkraftmaschine der Startergenerator im Starterbetrieb den Riemen mit dem zweiten Drehmoment antreibt.

Nachstehend wird die Erfindung anhand eines in insgesamt vier Figuren abgebildeten Ausführungsbeispieles näher erläutert.

### Kurze Beschreibung der Zeichnungen

Es zeigen:
- Figur 1: einen Längsschnitt durch eine erfindungsgemäße Riemenscheibe;
- Figur 2: einen Startergenerator mit montierter erfindungsgemäßer Riemenscheibe in schematischer Darstellung;
- Figur 3: einen Riementrieb mit dem Startergenerator aus Figur 2 mit montierter erfindungsgemäßer Riemenscheibe und
- Figur 4: in einem zweiachsigen Koordinatensystem das Drehschwingungsverhalten der erfindungsgemäßen Riemenscheibe im Generatorbetrieb des Startergenerators.

### Ausführliche Beschreibung der Zeichnungen

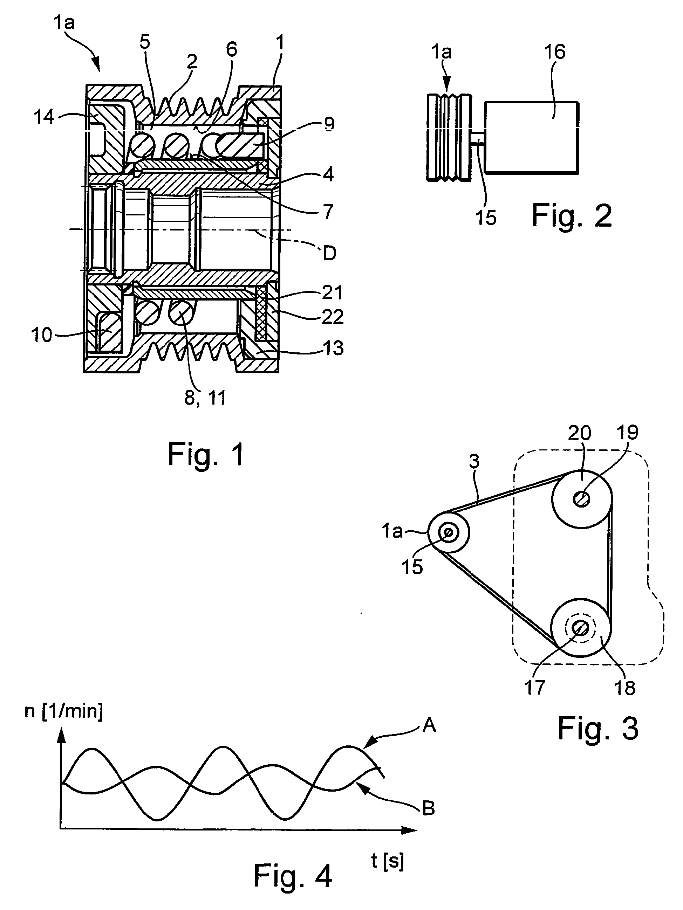

Figur 1 zeigt eine erfindungsgemäße Riemenscheibe 1 a im Längsschnitt. Die Riemenscheibe umfasst einen Laufmantel 1, der an seinem Außenumfang mit einer Lauffläche 2 für einen Riemen 3 (Figur 3) versehen ist. Koaxial zur Drehachse des Laufmantels ist eine Nabe 4 angeordnet. Zwischen der Nabe 4 und dem Laufmantel 2 sind Relativdrehungen möglich. Zwischen dem Laufmantel 1 und der Nabe 4 ist ein Ringraum 5 gebildet, der radial außen von einer Wand 6 und radial innen von einer Wand 7 begrenzt ist. In dem Ringraum 5 ist eine Schraubendrehfeder 8 angeordnet, deren Achse koaxial zur Drehachse D der Riemenscheibe 1a angeordnet ist. Das eine Federende 9 der Schraubendrehfeder 8 ist drehfest gegenüber dem Laufmantel 1 gehalten. Das andere Federende 10 ist drehfest gegenüber der Nabe 4 gehalten. Windungen 11 der Schraubendrehfeder 8 sind mit radialem Abstand zu den Wänden 6, 7 angeordnet, wenn kein Drehmoment an der Schraubendrehfeder 8 anliegt.

Der Laufmantel 1 ist über eine nicht dargestellte Gleitlagerbuchse auf der Nabe 4 schwenkbar gelagert. Die Gleitlagerbuchse weist an ihrem rechten Ende einen Flansch 13 auf, der fest mit dem Laufmantel 1 verbunden ist. Am linken Ende der Nabe ist auf der Nabe 4 eine Scheibe 14 befestigt. Das Federende 10 der Schraubendrehfeder 8 ist an dieser Scheibe 14 drehfest angeordnet.

Figur 2 zeigt die Riemenscheibe aus Figur 1, die auf einer Antriebswelle 15 eines Startergenerators 16 angeordnet ist.

Figur 3 zeigt in schematischer Darstellung einen Riementrieb, in dem der Startergenerator 16 mit der erfindungsgemäßen Riemenscheibe 1 a angeordnet ist. Der Riemen 3 umschlingt dabei sowohl die Riemenscheibe 1a als auch eine auf einer Kurbelwelle 17 angeordnete Riemenscheibe 18 und eine auf einer Wasserpumpenwelle 19 angeordnete Riemenscheibe 20. Anstelle oder zusätzlich zu der Wasserpumpe können weitere Aggregate in dem Riementrieb angeordnet sein.

Wenn der Startergenerator 16 im Generatorbetrieb arbeitet - also wenn die Kurbelwelle 17 den Startergenerator 16 antreibt - bildet die erfindungsgemäße Riemenscheibe 1a ein Drehschwingungsverhalten ab, wie es in der Darstellung in Figur 4 in Form von Kurven gezeigt ist. Die Kurbelwelle 17 unterliegt aufgrund des Verbrennungsprozesses Drehungleichförmigkeiten, so dass der Laufmantel 1 der angetriebenen Riemenscheibe 1a eine Sinusschwingung durchläuft, wie sie in Figur 4 mit A gekennzeichnet ist. Die Nabe 4 der erfindungsgemäßen Riemenscheibe 1a bildet den gedämpften Drehschwingungsverlauf ab, wie er in Figur 4 mit B gekennzeichnet ist. Die hier abgebildete Dämpfung wird erreicht durch Dämpfungsmittel, die zwischen der Nabe 4 und dem Laufmantel 1 wirken. Vorliegend ist eine Reibescheibe 21 vorgesehen, die einerseits an dem Flansch 13 der drehfest mit dem Laufmantel 1 verbundenen Gleitlagerbuche anliegt und die andererseits an einem Flansch 22 anliegt, der an der Nabe 4 befestigt ist. Die Reibscheibe 21 ist zwischen den Flansch 13, 22 eingespannt. Eine Relativdrehung zwischen diesen Flanschen 13, 22 findet unter Verrichtung von Reibarbeit statt.

Der Figur 4 ist zu entnehmen, dass die Amplituden der Drehschwingung der Nabe 4 deutlich geringer sind als die Amplituden der Drehschwingungen des Laufmantels 1.

Die Schraubendrehfeder 8 ist in dem Ringraum 5 so angeordnet, dass sie mit radialem Abstand zu den Wänden 6, 7 angeordnet ist. Unter einer Relativdrehung zwischen dem Laufmantel 1 und der Nabe 4 verdrehen die Federenden 9, 10 zueinander. Unter dieser Verdrehung vergrößern oder verkleinern sich die Windungen 11 der Schraubendrehfeder 8 in ihrem Durchmesser. Der zur Verfügung stehende Ringraum 5 und die Schraubendrehfeder 8 sind so aufeinander abgestimmt, dass betriebsbedingte Drehschwingungen im Generatorbetrieb freie Auslenkungen der Schraubendrehfeder 8 bewirken, wobei sichergestellt ist, dass sich die Windungen 11 nicht an eine der Wände 6, 7 anlegen.

Wenn der Startergenerator 16 im Starterbetrieb arbeitet, treten im Riementrieb Drehmomente auf, die um ein Mehrfaches höher sein können, als die betriebsbedingten Drehmomente im Generatorbetrieb des Startergenerators 16. Vorliegend ist die Schraubendrehfeder 8 so gewunden, dass in der Startphase eine Einschnürung der Schraubendrehfeder 8 stattfindet, so dass sich die Windungen 11 der Schraubendrehfeder 8 auf die Wand 7 des Ringraums 5 anlegen. Das bedeutet, dass eine formschlüssige Mitnahme des Laufmantels 1 gemeinsam mit der Nabe erfolgt. Das erforderliche Drehmoment zum Starten der Brennkraftmaschine kann auf diese Weise von dem Startergenerator 16 ungedämpft schnell und zuverlässig übertragen werden.

### Bezugszahlen

- 1: Laufmantel
- 1a: Riemenscheibe
- 2: Lauffläche
- 3: Riemen
- 4: Nabe
- 5: Ringraum
- 6: Wand
- 7: Wand
- 8: Schraubendrehfeder
- 9: Federende
- 10: Federende
- 11: Windung
- 13: Flansch
- 14: Scheibe
- 15: Antriebswelle
- 16: Startergenerator
- 17: Kurbelwelle
- 18: Riemenscheibe
- 19: Wasserpumpenwelle
- 20: Riemenscheibe
- 21: Reibscheibe
- 22: Flansch

## Patentansprüche

1. Riemenscheibe, mit einem eine Lauffläche (2) für einen Riemen (3) aufweisenden Laufmantel (1), der auf einer koaxial zur Drehachse der Riemenschelbe (1a) angeordneten Nabe (4) um die Drehachse (D) herum schwenkbar gelagert ist, wobei zwischen dem Laufmantel (1) und der Nabe (4) ein von Wänden (6, 7) begrenzter Ringraum (5) gebildet ist, in dem eine um die Drehachse (D) herum gewundene, wenigstens eine Windung (11) aufweisende Schraubendrehfeder (8) angeordnet ist, deren eines Federende (10) drehfest gegenüber der Nabe und deren anderes Federende (9) drehfest gegenüber dem Laufmantel (1) angeordnet ist, wobei ein erstes Drehmoment von dem angetriebenen Laufmantel (1) über die Schraubendrehfeder (8) auf die Nabe (4) übertragbar ist, **dadurch gekennzeichnet, dass** die Riemenscheibe (1a) einem Startergenerator (16), zugeordnet ist auf dessen Antriebswelle (15) die ersten Drehmomente im Generatorbetrieb des Startergenerators (16) wirksam sind, und wobei die zweiten Drehmomente im Starterbetrieb des Startergenerators (16) wirksam sind und dass die Schraubendrehfeder (8) unter dem ersten Drehmoment mit radialem Abstand zu den Wänden (6, 7) angeordnet ist, wobei die Federenden (9, 10) der Schraubendrehfeder (8) unter einem zweiten auf die Nabe (4) einwirkenden Drehmoment unter Veränderung des Durchmessers der Windung (11) der Schraubendrehfeder (8) an der einen Wand (6, 7) des Ringraums (5) anliegt, wobei das zweite Drehmoment größer als das erste Drehmoment ist.

2. Riementrieb einer Brennkraftmaschine, mit einer von einer Kurbelwelle (17) der Brennkraftmaschine angetriebenen Riemenscheibe (18) zum Antreiben des Riemens (3), und mit einem Startergenerator (16) nach Anspruch 1, wobei die auf der Antriebswelle (15) des Startergenerators (16) angeordnete Riemenscheibe (1 a) von dem Riemen (3) umschlungen ist, wobei zum Starten der Brennkraftmaschine der Startergenerator (16) im Starterbetrieb den Riemen (3) mit dem zweiten Drehmoment antreibt.

## Claims

1. Pulley, with a running casing (1) which has a running surface (2) for a belt (3) and is mounted in a manner such that it can pivot about the axis of rotation (D) on a hub (4) arranged coaxially with respect to the axis of rotation of the pulley (1a), wherein an annular space (5) is formed between the running casing (1) and the hub (4), which annular space is delimited by walls (6, 7) and in which is arranged a helical torsion spring (8) which is wound around the axis of rotation (D), has at least one coil (11) and the one spring end (10) of which is arranged in a rotationally fixed manner in relation to the hub and the other spring end (9) of which is arranged in a rotationally fixed manner in relation to the running casing (1), and wherein a first torque can be transmitted from the driven running casing (1) to the hub (4) via the helical torsion spring (8), **characterized in that** the pulley (1a) is assigned to a starter generator (16), on the drive shaft (15) of which the first torques are effective in the generating mode of the starter generator (16), and the second torques being effective in the starter mode of the starter generator (16), and **in that** the helical torsion spring (8) is arranged at a radial distance from the walls (6, 7) under the first torque, with the spring ends (9, 10) of the helical torsion spring (8), under a second torque acting on the hub (4), bearing against the one wall (6, 7) of the annular space (5) with the diameter of the coil (11) of the helical torsion spring (8) being changed, and with the second torque being greater than the first torque.

2. Belt drive of an internal combustion engine, with a pulley (18) which is driven by a crankshaft (17) of the internal combustion engine and is intended for driving the belt (3), and with a starter generator (16) according to Claim 1, wherein the pulley (1a) which is arranged on the drive shaft (15) of the starter generator (16) is looped around by the belt (3), and wherein, in order to start the internal combustion engine, the starter generator (16) drives the belt (3) with the second torque during the starter mode.

## Revendications

1. Poulie à courroie comprenant une enveloppe de roulement (1) présentant une surface de roulement (2) pour une courroie (3), qui est montée sur un moyeu (4) disposé coaxialement à l'axe de rotation de la poulie à courroie (1a) de manière à pouvoir pivoter autour de l'axe de rotation (D), un espace annulaire (5) limité par des parois (6, 7) étant formé entre l'enveloppe de roulement (1) et le moyeu (4), un ressort de torsion à boudin (8) présentant au moins un enroulement (11), enroulé autour de l'axe de rotation (D), étant disposé dans l'espace annulaire, l'une de ses extrémités de ressort (10) étant disposée de manière fixe en rotation par rapport au moyen et l'autre extrémité de ressort (9) étant disposée de manière fixe en rotation par rapport à l'enveloppe de roulement (1), un premier couple pouvant être transmis de l'enveloppe de roulement entraînée (1) par le biais du ressort de torsion à boudin (8) au moyeu (4), **caractérisée en ce que** la poulie à courroie (1a) est associée à un générateur de démarrage (16), sur l'arbre d'entraînement (15) duquel agissent les premiers couples en mode générateur du générateur de démarrage (16), les deuxièmes couples agissant en mode de démarrage du générateur de démarrage (16) et **en ce que** le ressort de torsion à boudin (8) est disposé sous l'effet du premier couple à distance radiale des parois (6, 7), les extrémités du ressort (9, 10) du ressort de torsion à boudin (8) s'appliquant sous l'effet d'un deuxième couple agissant sur le moyeu (4) avec modification du diamètre de l'enroulement (11) du ressort de torsion à boudin (8) contre l'une des parois (6, 7) de l'espace annulaire (5), le deuxième couple étant supérieur au premier couple.

2. Entraînement à courroie d'un moteur à combustion interne, comprenant une poulie à courroie (18) entraînée par un vilebrequin (17) du moteur à combustion interne pour l'entraînement de la courroie (3), et comprenant un générateur de démarrage (16) selon la revendication 1, la poulie à courroie (1a) disposée sur l'arbre d'entraînement (15) du générateur de démarrage (16) étant entourée par la courroie (3), le générateur de démarrage (16) entraînant la courroie (3) avec le deuxième couple en mode de démarrage pour le démarrage du moteur à combustion interne.
